# EUROPÄISCHE PATENTSCHRIFT

(11) **EP 0 819 497 B1**
(45) Veröffentlichungstag und Bekanntmachung des Hinweises auf die Patenterteilung: **02.01.2002**
(21) Anmeldenummer: 97111626.4
(22) Anmeldetag: 09.07.1997
(51) Int. Cl.: B23K 26/00, B21C 37/26, F28F 1/36

(54) **Verfahren zur Herstellung eines Rippenrohrs**
Process for manufacturing a finned tube
Procédé de fabrication de tube à nervure

(30) Priorität: 17.07.1996 DE 19628745
(43) Veröffentlichungstag der Anmeldung: 21.01.1998
(73) Patentinhaber: KME Schmöle GmbH, 58706 Menden (DE)
(72) Erfinder: Wagner, Thomas, 58706 Menden (DE); Kramer, Frank, 59439 Holzwickede (DE)

(56) Entgegenhaltungen:
- EP-A- 0 303 074

## Beschreibung

Die Erfindung betrifft ein Verfahren zur Herstellung eines Rippenrohrs, bei dem ein Rohr aus Edelstahl durch wendelförmiges Bewickeln mit einem Band aus Kupfer berippt wird.

Durch die EP 0 303 074 B1 gehört ein Verfahren zur Herstellung von Wärmetauscherrohren aus Metall mit durch Rippen vergrößerter Wärmetauschfläche zum Stand der Technik. Hierbei wird ein sich drehendes Rohr auf seiner Außenfläche wendelförmig mit einem die Rippen bildenden Band bewickelt, wobei die Unterkante des Bands mit dem Rohr kontinuierlich verschweißt wird.

Die Verschweißung geschieht dadurch, daß die Kontaktfläche zwischen Rohr und Bandunterkante ausschließlich an der Rohroberfläche durch einen Laserstrahl aufgeschmolzen und zugleich durch den Laserstrahl die Unterkante des zulaufenden Bands ausschließlich im Bereich der Auflaufstelle angeschmolzen wird.

Die beiden auf- bzw. angeschmolzenen Flächenbereiche der Rohroberfläche und der Bandunterkante werden dann infolge der auf das zulaufende Band ausgeübten Zugkraft beim Auflaufen des Bands auf das Rohr spaltfrei zusammengefügt und beim anschließenden Erkalten miteinander verbunden.

Dieses Verfahren hat sich in der Praxis bewährt. Insbesondere bei der Verwendung von Edelstählen für Rohr und Rippe ist das bekannte Verfahren gut geeignet und wird vielfach bei der Herstellung von Rippenrohren für die unterschiedlichsten Einsatzzwecke angewendet.

Es hat sich jedoch gezeigt, daß dieses Verfahren für die Herstellung eines Rippenrohrs mit einem Rohr aus Edelstahl und einer Rippe aus Kupfer anwendungstechnisch schwierig und daher nur mit erhöhtem verfahrenstechnischen Aufwand durchführbar ist.

Das Problem hat seine Ursache hauptsächlich in den unterschiedlichen Werkstoffeigenschaften von Edelstahl und Kupfer, insbesondere den unterschiedlichen Schmelztemperaturen mit einer Temperaturdifferenz von ca. 400 °C. Hier besteht die Gefahr, daß das Kupfer sublimentiert, bevor der Edelstahl aufgeschmolzen ist.

Diese Tatsache macht eine exakte Abstimmung der Laserstrahleinstellung und -steuerung sowie der Dreh- und Wickelgeschwindigkeiten erforderlich. Häufig muß auch während des Prozesses zwecks Feinabstimmung korrigierend eingegriffen werden. Demzufolge ist der verfahrensmäßige bzw. steuerungs- und automatisationstechnische Aufwand hoch.

Desweiteren kommt hinzu, daß der Energieeinsatz für den Laser, der auf die Rohroberfläche und die Bandunterkante fokussiert werden muß, sehr hoch ist. Insgesamt stößt das bekannte Verfahren daher bei der Kombination der Werkstoffe Edelstahl und Kupfer an die Grenze seiner Durchführbarkeit.

Der Erfindung liegt ausgehend vom Stand der Technik die Aufgabe zugrunde, ein Verfahren zur Herstellung eines Rippenrohrs zu schaffen, welches speziell auf die Werkstoffkombination Edelstahl als Rohr und Kupfer als wendelförmige Rippe ausgerichtet ist und technisch eine qualitativ hochwertige Verbindung von Rohr und Rippe gewährleistet. Weiterhin zielt die Erfindung auf ein Rippenrohr ab mit einem korrosionsbeständigen Rohr als Kern und einer durch eine Rippe hoher Wärmeleitfähigkeit vergrößerten Wärmetauschfläche.

Die Lösung dieser Aufgabe besteht in den im Anspruch 1 aufgeführten Merkmalen.

Das erfindungsgemäße Verfahren sieht vor, ausschließlich die Rohroberfläche in der Kontaktzone von Rohr und Bandunterkante vor dem Aufsetzen des Kupferbands fortlaufend durch einen Laserstrahl aufzuschmelzen. Dies geschieht in einem Bereich, dessen Erstreckung in axialer Richtung des Rohrs größer als die Breite der Bandunterkante bemessen ist. Die Länge des Schmelzbereichs in Umfangsrichtung des Rohrs richtet sich nach den rohrspezifischen Abmessungen wie Rohrdurchmesser und Rippendicke sowie den Werkstoffeigenschaften. Der parallel gebündelte Lichtstrahl des Lasers kann gezielt in diesem Bereich zu einem Brennfleck gebündelt werden. So entsteht eine hohe Leistungsdichte, die zweckoptimiert genutzt wird.

Wesentlich bei dem erfindungsgemäßen Verfahren ist, daß der rohrseitige Kantenbereich des Kupferbands unangeschmolzen in die Schmelze gesetzt wird. Durch die anschließend eintretende Erstarrung des aufgeschmolzenen Rohrmaterials wird das Kupferband am Rohr sicher und spaltfrei festgelegt.

Die Erfindung schafft damit ein ökonomisches Verfahren, mit dem die Verbindung einer wendelförmigen Kupferrippe auf einem Edelstahlrohr unter Vermeidung der bisherigen Nachteile möglich wird. Trotz der sehr unterschiedlichen werkstoffspezifischen Eigenschaften von Edelstahl und Kupfer ist eine wirtschaftliche Herstellung von Rippenrohren in der Kombination Edelstahl/Kupfer möglich.

Das hochkant aufgesetzte Kupferband wird am Fuß ohne Zusatzwerkstoff spaltfrei am Rohr festgelegt. Die Fügenaht ist dünn und durchgehend. Auch ist die wärmebeeinflußte Zone klein und es treten nur geringe Gefügeveränderungen in Rohr und Rippe auf.

Die kleine wärmebeeinflußte Zone verbunden mit der dünnen Fügenaht verhindern einen Verzug im Material. Dies führt zu einer hohen Form- und Maßhaltigkeit des Rippenrohrs.

Der Laserstrahl kann exakt auf seine ausschließliche Aufgabe, nämlich der Aufschmelzung der Rohroberfläche in der Kontaktzone, eingestellt und fokussiert werden. Dies gewährleistet eine kurze Erwärmungsdauer und eine hohe Fügegeschwindigkeit.

Das durch das erfindungsgemäße Verfahren hergestellte Rippenrohr zeichnet sich durch die Kombination eines Rohrs aus Edelstahl mit Rippen aus Kupfer aus.

Ein solches Rippenrohr gelangt vorzugsweise in Anwendungsbereichen zum Einsatz, bei denen korrosive Medien durch das Rohr strömen, wohingegen auf der Außenseite ein Wärmetauschermedium vorhanden ist, welches gar nicht oder nur gering korrosiv wirkend ist.

Durch die Ausführung des Rohrs aus Edelstahl werden Phasengrenzflächenreaktionen zwischen der inneren Metalloberfläche des Rohrs und den flüssigen oder gasförmigen Tauschermedien vermieden. Schädigungen, wie Werkstoffabtrag oder Eigenschaftsveränderungen des Werkstoffs wird so entgegengewirkt. Auf der anderen Seite zeichnet sich das Rippenrohr wegen seiner Kupferrippe aus und den damit verbundenen Vorteilen der hohen Wärmeleitfähigkeit sowie der Widerstandsfähigkeit gegen Luftfeuchtigkeit, Heißwasser und verschiedenen Säuren.

Das erfindungsgemäße Rippenrohr weist einen sehr guten Wärmefluß und somit einen hohen Wirkungsgrad auf. Dementsprechend können mit den erfindungsgemäßen Rippenrohren ausgelegte Wärmetauscher effizienter genutzt und im Bauvolumen verkleinert werden, so daß letztendlich auch eine Senkung der Wärmetauscherkosten zu erwarten ist.

Die Erfindung ist nachfolgend anhand eines in den Zeichnungen dargestellten Ausführungsbeispiels näher beschrieben.

Es zeigen:
- Figur 1: in der Seitenansicht, teilweise in geschnittener Darstellungsweise, ein Rippenrohr;
- Figur 2: einen Ausschnitt aus einem solchen Rippenrohr und
- Figur 3: in vergrößerter Darstellung den Ausschnitt III der Figur 2.

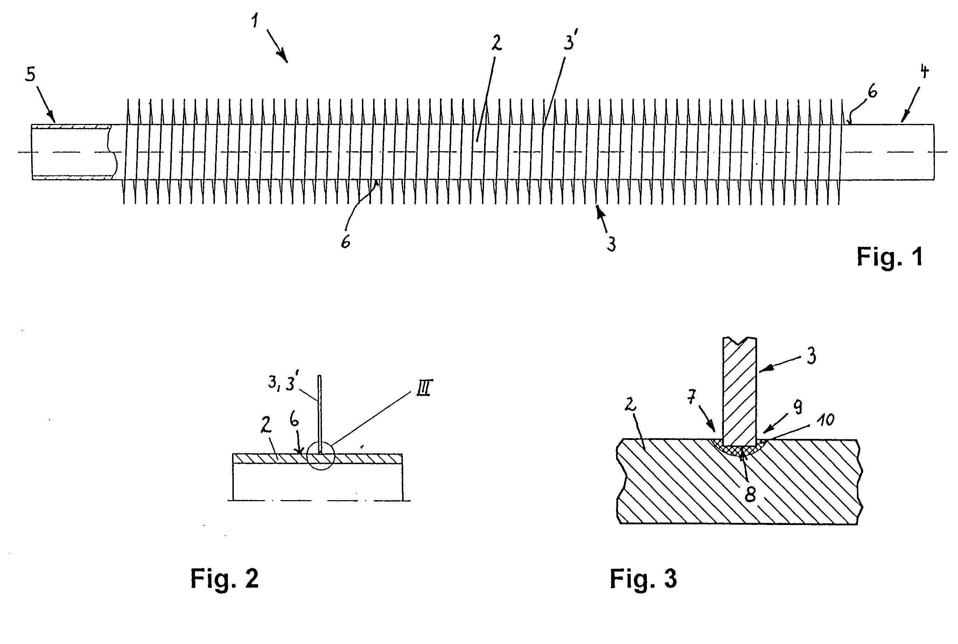

Die Figur 1 zeigt ein Rippenrohr 1, bei dem ein Rohr 2 aus Edelstahl durch wendelförmiges Bewickeln mit einem Band 3 aus Kupfer berippt ist.

Bei dessen Herstellung wird das zu berippende Rohr 2 zunächst mit seinen Enden 4, 5 in einer Weise endseitig eingespannt, daß es drehend angetrieben werden kann. Das auf das Rohr 2 zu wickelnde Band 3 wird von einer Vorratsrolle abgezogen, gerichtet und unter definierter Zug- und Bremskraftwirkung dem Rohr 2 zugeführt. Bei gleichzeitiger Drehung des Rohrs 2 und einstellbarer Vorschubbewegung des Bands 3 in Axialrichtung des Rohrs 2 wird das Band 3 an der Rohroberfläche 6 kontinuierlich fortschreitend festgelegt. Dabei bildet das Band 3 eine endlose Rippe 3' zur Vergrößerung der Wärmetauschfläche des Rohrs 2.

Das Kupferband 3 ist hierbei unangeschmolzen hochkant in einen durch einen Laserstrahl ausschließlich an der Rohroberfläche 6 erzeugten Schmelzbereich 10 gesetzt und durch Erstarrung des aufgeschmolzenen Rohrmaterials am Rohr festgelegt (vgl. Figuren 2 und 3).

Bei der Fügung wird ausschließlich die Rohroberfläche 6 in der Kontaktzone 7 von Rohr 2 und der Bandunterkante 8 vor dem Aufsetzen des Kupferbands 3 durch einen Laserstrahl aufgeschmolzen. Dies geschieht fortlaufend zeit- und positionsgerecht auf den wendelförmigen Wickelvorgang abgestimmt. Die Erstreckung des aufgeschmolzenen Bereichs 10 ist in axialer Richtung des Rohrs 2 größer als die Breite der Bandunterkante 8 bemessen.

Nachdem die Rohroberfläche 6 in der Kontaktzone 7 aufgeschmolzen ist, wird der rohrseitige Kantenbereich 9 des Kupferbands 3 unangeschmolzen in die Schmelze gesetzt. Nach dem Erstarren des aufgeschmolzenen Rohrmaterials stellt sich eine werkstoffkombinationsgerechte Fügung ein mit einer zuverlässigen qualitativ hochwertigen Festlegung des Kupferbands 3 am Rohr 2.

Wie die Figur 3 zeigt, taucht der rohrseitige Kantenbereich 9 beim Aufsetzen des Kupferbands 3 so in die Schmelze ein. Die Bandunterkante 8 ragt so geringfügig bis unter die Rohroberfläche 6. Nach dem Erstarren der Schmelze ist eine spaltfreie Fügung des Kupferbands am Rohr 2 gewährleistet mit der damit verbundenen hohen Sicherheit gegen Korrosionsangriffe am Übergang 10. Die wärmebeeinflußte Zone in diesem Bereich ist klein, so daß nachteilige Gefügeveränderungen oder Materialverluste vermieden werden. Gleichzeitig ist ein hoher Rippenwirkungsgrad und eine große Wärmeübertragungsleistung gewährleistet.

### Bezugszeichenaufstellung

- 1 -: Rippenrohr
- 2 -: Rohr
- 3 -: Kupferband
3' - Rippe
- 4 -: Ende v. 2
- 5 -: Ende v. 2
- 6 -: Rohroberfläche
- 7 -: Kontaktzone
- 8 -: Bandunterkante
- 9 -: Kantenbereich
- 10 -: Schmelzbereich

## Patentansprüche

1. Verfahren zur Herstellung eines Rippenrohrs (1), bei dem ein Rohr (2) aus Edelstahl durch wendelförmiges Bewickeln mit einem Band (3) aus Kupfer berippt wird, wobei ausschließlich die Rohroberfläche (6) in der Kontaktzone (7) von Rohr (2) und Bandunterkante (8) vor dem Aufsetzen des Kupferbands (3) fortlaufend durch einen Laserstrahl in einem Bereich (10) aufgeschmolzen wird, dessen Erstreckung in axialer Richtung des Rohrs (2) größer als die Breite der Bandunterkante (8) bemessen ist, dann der rohrseitige Kantenbereich (9) des Kupferbands (3) unangeschmolzen in die Schmelze gesetzt und durch Erstarrung des aufgeschmolzenen Rohrmaterials das Kupferband (33) am Rohr (2) festgelegt wird.

## Claims

1. Method for production of a finned tube (1) in which a tube (2) of stainless steel is finned by wrapping helically with a strip (3) of copper, whereby prior to the application of the copper strip (3) solely the tube surface (6) in the contact zone (7) of the tube (2) and the lower edge (8) of the strip is continuously melted by a laser beam in a region (10) the extension of which in the axial direction of the tube (2) is greater than the breadth of the lower edge (8) of the strip, then the edge region (9) of the copper strip (3) on the tube side is placed unmelted in the melt and the copper strip (3) is secured to the tube (2) by solidification of the melted tube material.

## Revendications

1. Procédé de fabrication d'un tube à ailettes (1) selon lequel on garnit un tube (2) en acier inoxydable par enroulement en hélice avec une bande (3) en cuivre, et avant de mettre en place la bande de cuivre (3), on fait fondre en continu exclusivement la surface superficielle du tube (6) dans la zone de contact (7) entre le tube (2) et l'arête inférieure (8) de la bande, à l'aide d'un faisceau laser dans une zone (10), dont l'extension dans la direction axiale du tube (2) est supérieure à la largeur de l'arête inférieure (8) de la bande pour que la zone d'arête (9) tournée vers le tube de la bande de cuivre (3) vienne dans le bain sans être fondue, et par solidification de la matière fondue du tube, on bloque la bande de cuivre (3) dans le tube (2).
